# EUROPEAN PATENT APPLICATION

(11) **EP 4 694 289 A1**
(43) Date of publication of application: **11.02.2026**
(21) Application number: 24784430.1
(22) Date of filing: 07.04.2024
(51) Int. Cl.: H04W 24/06

(54) **INFORMATION PROCESSING METHOD AND APPARATUS, AND NETWORK ELEMENT**

(30) Priority: 07.04.2023 CN 202310371218
(71) Applicant: Vivo Mobile Communication Co., Ltd., Dongguan, Guangdong 523863 (CN)
(72) Inventor: CHENG, Sihan, Dongguan, Guangdong 523863 (CN); CHONG, Weiwei, Dongguan, Guangdong 523863 (CN)
(74) Representative: Shieldmark
(86) International application number: PCT/CN2024/086350
(87) International publication number: WO 2024/208348

(57) **Abstract**

This application discloses an information processing method and apparatus, and a network function, and belongs to the field of communication technologies. The method includes: performing, by a first network function, inference on analytics based on at least two models to obtain a first inference result; determining, by the first network function, first accuracy information; and sending, by the first network function, first information to a second network function based on the first accuracy information, where the first information includes at least one of the following: first indication information, where the first indication information is used to indicate that accuracy for an inference result corresponding to the analytics or the first inference result decreases or does not meet an accuracy requirement; the first accuracy information; a metric type corresponding to the first accuracy information; a problem type corresponding to the first accuracy information; second indication information, where the second indication information is used to indicate a recommended operation for the second network function; and third indication information, where the third indication information is used to indicate a time at which the accuracy for the inference result corresponding to the analytics or the first inference result recovers to meet a preset accuracy requirement.

## Description

### CROSS-REFERENCE TO RELATED APPLICATIONS

This application claims priority to Chinese Patent Application No. 202310371218.7, filed in China on April 7, 2023, which is incorporated herein by reference in its entirety.

### TECHNICAL FIELD

This application belongs to the field of communication technologies, and specifically relates to an information processing method and apparatus, and a network function.

### BACKGROUND

In a mobile communication system, a network function that has an intelligent function such as a network data analytics function (Network Data Analytics Function, NWDAF) may perform data analytics (Analytics), for example, predict future load information of a network function. The NWDAF is used as an example. The NWDAF may receive a request of a consumer network function (i.e. a consumer NF) or the like, perform inference on analytics based on a model to obtain a data analytics result, and feed back the data analytics result to the consumer network function. However, in a related technology, the data analytics result is generally obtained by performing prediction on the analytics based on a single model. As a result, accuracy for the data analytics result depends entirely on accuracy of the model, causing poor reliability of the data analytics result.

### SUMMARY

Embodiments of this application provide an information processing method and apparatus, and a network function, to improve reliability of a data analytics result when data analytics is performed based on a network function such as an NWDAF.

According to a first aspect, an information processing method is provided, where the method includes:
performing, by a first network function, inference on analytics based on at least two models to obtain a first inference result;
determining, by the first network function, first accuracy information, where the first accuracy information is used to indicate accuracy for the first inference result or accuracy for an inference result corresponding to the analytics; and
sending, by the first network function, first information to a second network function based on the first accuracy information, where the first information includes at least one of the following:
   first indication information, where the first indication information is used to indicate that the accuracy for the inference result corresponding to the analytics or the first inference result decreases or does not meet an accuracy requirement;
   the first accuracy information;
   a metric type corresponding to the first accuracy information;
   a problem type corresponding to the first accuracy information;
   second indication information, where the second indication information is used to indicate a recommended operation for the second network function; and
   third indication information, where the third indication information is used to indicate a time at which the accuracy for the inference result corresponding to the analytics or the first inference result recovers to meet a preset accuracy requirement.

According to a second aspect, an information processing apparatus is provided, where the apparatus includes:
a first inference module, configured to perform inference on analytics based on at least two models to obtain a first inference result;
a first determining module, configured to determine first accuracy information, where the first accuracy information is used to indicate accuracy for the first inference result or accuracy for an inference result corresponding to the analytics; and
a first sending module, configured to send first information to a second network function based on the first accuracy information, where the first information includes at least one of the following:
   first indication information, where the first indication information is used to indicate that the accuracy for the inference result corresponding to the analytics or the first inference result decreases or does not meet an accuracy requirement;
   the first accuracy information;
   a metric type corresponding to the first accuracy information;
   a problem type corresponding to the first accuracy information;
   second indication information, where the second indication information is used to indicate a recommended operation for the second network function; and
   third indication information, where the third indication information is used to indicate a time at which the accuracy for the inference result corresponding to the analytics or the first inference result recovers to meet a preset accuracy requirement.

According to a third aspect, an information processing method is provided, where the method includes:
receiving, by a second network function, first information from a first network function, where the first information includes at least one of the following:
first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, where the first accuracy information is used to indicate the accuracy for the inference result corresponding to the analytics or the first inference result;
a metric type corresponding to the first accuracy information;
a problem type corresponding to the first accuracy information;
second indication information, where the second indication information is used to indicate a recommended operation for the second network function; and
third indication information, where the third indication information is used to indicate a time at which the accuracy for the inference result corresponding to the analytics or the first inference result recovers to meet a preset accuracy requirement.

According to a fourth aspect, an information processing apparatus is provided, where the apparatus includes:
a first receiving module, configured to receive first information from a first network function, where the first information includes at least one of the following:
first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, where the first accuracy information is used to indicate the accuracy for the inference result corresponding to the analytics or the first inference result;
a metric type corresponding to the first accuracy information;
a problem type corresponding to the first accuracy information;
second indication information, where the second indication information is used to indicate a recommended operation for a second network function; and
third indication information, where the third indication information is used to indicate a time at which the accuracy for the inference result corresponding to the analytics or the first inference result recovers to meet a preset accuracy requirement.

According to a fifth aspect, an information processing method is provided, where the method includes:
receiving, by a third network function, a first request message from a first network function, where the first request message includes accuracy monitoring capability information of the first network function, and the first request message is used to request registration of an accuracy monitoring capability of the first network function; and
storing, by the third network function, the accuracy monitoring capability information of the first network function.

According to a sixth aspect, an information processing apparatus is provided, where the apparatus includes:
a second receiving module, configured to receive a first request message from a first network function, where the first request message includes accuracy monitoring capability information of the first network function, and the first request message is used to request registration of an accuracy monitoring capability of the first network function; and
a storage module, configured to store the accuracy monitoring capability information of the first network function.

According to a seventh aspect, an information processing method is provided, where the method includes:
sending, by a first network function, a first request message to a third network function, where
the first request message includes accuracy monitoring capability information of the first network function, and the first request message is used to request registration of an accuracy monitoring capability of the first network function.

According to an eighth aspect, an information processing apparatus is provided, where the apparatus includes:
a second sending module, configured to send a first request message to a third network function, where
the first request message includes accuracy monitoring capability information of the first network function, and the first request message is used to request registration of an accuracy monitoring capability of the first network function.

According to a ninth aspect, a first network function is provided. The first network function includes a processor and a memory. The memory stores a program or instructions capable of running on the processor, and the program or the instructions are executed by the processor to implement the steps of the method according to the first aspect.

According to a tenth aspect, a first network function is provided, including a processor and a communication interface. The processor is configured to: perform inference on analytics based on at least two models to obtain a first inference result, and determine first accuracy information, where the first accuracy information is used to indicate accuracy for the first inference result or accuracy for an inference result corresponding to the analytics. The communication interface is configured to send first information to a second network function based on the first accuracy information, where the first information includes at least one of the following: first indication information, where the first indication information is used to indicate that the accuracy for the inference result corresponding to the analytics or the first inference result decreases or does not meet an accuracy requirement; the first accuracy information; a metric type corresponding to the first accuracy information; a problem type corresponding to the first accuracy information; second indication information, where the second indication information is used to indicate a recommended operation for the second network function; and third indication information, where the third indication information is used to indicate a time at which the accuracy for the inference result corresponding to the analytics or the first inference result recovers to meet a preset accuracy requirement.

According to an eleventh aspect, a second network function is provided. The second network function includes a processor and a memory. The memory stores a program or instructions capable of running on the processor, and the program or the instructions are executed by the processor to implement the steps of the method according to the third aspect.

According to a twelfth aspect, a second network function is provided, including a processor and a communication interface. The communication interface is configured to receive first information from a first network function, where the first information includes at least one of the following: first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models; first accuracy information, where the first accuracy information is used to indicate the accuracy for the inference result corresponding to the analytics or the first inference result; a metric type corresponding to the first accuracy information; a problem type corresponding to the first accuracy information; second indication information, where the second indication information is used to indicate a recommended operation for the second network function; and third indication information, where the third indication information is used to indicate a time at which the accuracy for the inference result corresponding to the analytics or the first inference result recovers to meet a preset accuracy requirement.

According to a thirteenth aspect, a third network function is provided. The third network function includes a processor and a memory. The memory stores a program or instructions capable of running on the processor, and the program or the instructions are executed by the processor to implement the steps of the method according to the fifth aspect.

According to a fourteenth aspect, a third network function is provided, including a processor and a communication interface. The communication interface is configured to receive a first request message from a first network function, where the first request message includes accuracy monitoring capability information of the first network function, and the first request message is used to request registration of an accuracy monitoring capability of the first network function. The processor is configured to store the accuracy monitoring capability information of the first network function.

According to a fifteenth aspect, a first network function is provided. The first network function includes a processor and a memory. The memory stores a program or instructions capable of running on the processor, and the program or the instructions are executed by the processor to implement the steps of the method according to the seventh aspect.

According to a sixteenth aspect, a first network function is provided, including a processor and a communication interface. The communication interface is configured to send a first request message to a third network function, where the first request message includes accuracy monitoring capability information of the first network function, and the first request message is used to request registration of an accuracy monitoring capability of the first network function.

According to a seventeenth aspect, a readable storage medium is provided. The readable storage medium stores a program or instructions, and the program or the instructions are executed by a processor to implement the steps of the method according to the first aspect, or implement the steps of the method according to the third aspect, or implement the steps of the method according to the fifth aspect, or implement the steps of the method according to the seventh aspect.

According to an eighteenth aspect, a chip is provided. The chip includes a processor and a communication interface, the communication interface is coupled to the processor, and the processor is configured to run a program or instructions to implement the steps of the method according to the first aspect, or implement the steps of the method according to the third aspect, or implement the steps of the method according to the fifth aspect, or implement the steps of the method according to the seventh aspect.

According to a nineteenth aspect, a computer program/program product is provided. The computer program/program product is stored in a storage medium, and the computer program/program product is executed by at least one processor to implement the steps of the method according to the first aspect, or implement the steps of the method according to the third aspect, or implement the steps of the method according to the fifth aspect, or implement the steps of the method according to the seventh aspect.

In the embodiments of this application, the first network function performs inference on the analytics based on the at least two models to obtain the first inference result, determines the first accuracy information, and sends the first information to the second network function based on the first accuracy information, where the first information includes at least one of the following: the first indication information, where the first indication information is used to indicate that the accuracy for the inference result corresponding to the analytics or the first inference result decreases or does not meet the accuracy requirement; the first accuracy information; the metric type corresponding to the first accuracy information; the problem type corresponding to the first accuracy information; the second indication information, where the second indication information is used to indicate the recommended operation for the second network function; and the third indication information, where the third indication information is used to indicate the time at which the accuracy for the inference result corresponding to the analytics or the first inference result recovers to meet the preset accuracy requirement. In other words, in the embodiments of this application, the first network function performs inference on the analytics based on a plurality of models, performs accuracy monitoring on the inference result, and provides feedback to the second network function. This not only helps improve reliability and accuracy for the inference result that is of the analytics and that is obtained by the first network function, but also helps the second network function learn of accuracy for the inference result of the analytics thereof, thereby reducing a case in which the second network function uses an inference result with a relatively low accuracy.

### BRIEF DESCRIPTION OF DRAWINGS

FIG. 1 is a block diagram of a wireless communication system applicable to an embodiment of this application;
FIG. 2 is a flowchart of an information processing method according to an embodiment of this application;
FIG. 3 is a flowchart of another information processing method according to an embodiment of this application;
FIG. 4 is a flowchart of another information processing method according to an embodiment of this application;
FIG. 5 is a flowchart of another information processing method according to an embodiment of this application;
FIG. 6 is a flowchart of another information processing method according to an embodiment of this application;
FIG. 7 is a flowchart of another information processing method according to an embodiment of this application;
FIG. 8 is a structural diagram of an information processing apparatus according to an embodiment of this application;
FIG. 9 is a structural diagram of another information processing apparatus according to an embodiment of this application;
FIG. 10 is a structural diagram of another information processing apparatus according to an embodiment of this application;
FIG. 11 is a structural diagram of another information processing apparatus according to an embodiment of this application;
FIG. 12 is a structural diagram of a communication device according to an embodiment of this application; and
FIG. 13 is a structural diagram of a network-side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that, terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, i.e. solution 1: including A and not including B; solution 2: including B and not including A; and solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed or the requested result.

It should be noted that, a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

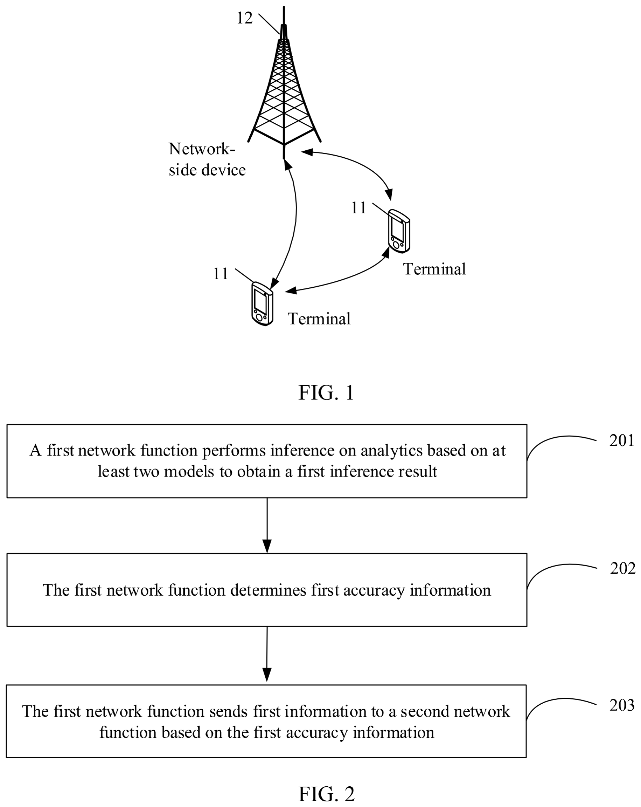

FIG. 1 is a block diagram of a wireless communication system applicable to an embodiment of this application. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (personal computer, PC), a teller machine, a self-service machine, or another terminal side device. The wearable device includes: a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of this application, only a core network device in the NR system is used as an example for description, and a specific type of the core network device is not limited.

For ease of understanding, the following describes some content related to the embodiments of this application.
1. An NWDAF may be split into two network functions that are as follows:
   a model training logical function (Model Training Logical Function, MTLF), used to generate a model and perform model training; and
   an analytics logical function (Analytics Logical Function, AnLF), used to perform inference to generate prediction information.
2. Process of monitoring accuracy for a data analytics task of a machine learning (Machine Learning, ML) model:
   NWDAF ML model monitoring subscription (i.e. Nnwdaf_MLModelMonitor_Subscribe) and NWDAF ML model monitoring notification (i.e. Nnwdaf_MLModelMonitor_ Notify) service operations are used for this purpose. A service consumer, i.e. an NWDAF containing an MTLF, subscribes at a service producer, i.e. an NWDAF containing an AnLF, to be notified when analytics accuracy of a previously provided ML model is insufficient. For example, a process of monitoring analytics accuracy of the ML model may include the following steps:
      Step 0. Upon receiving an ML model monitoring registration (Nnwdaf_MLModelMonitor_Register) request, based on a local policy, the NWDAF containing the MTLF determines to subscribe to analytics accuracy monitoring for the ML model.
      Step 1. The NWDAF containing the MTLF sends an Nnwdaf_MLModelMonitor_Subscribe request (an analytics ID, a unique identifier of the to-be-monitored ML model, a to-be-monitored accuracy metric, and optionally, a reporting threshold or a reporting period) to an NWDAF containing an AnLF subscription endpoint.
      Step 2. The NWDAF containing the AnLF sends a response to the NWDAF containing the MTLF.
      Step 3. The NWDAF containing the AnLF starts to monitor analytics accuracy of the ML model (if not started).

It should be noted that the NWDAF containing the AnLF may monitor analytics accuracy in a plurality of manners, for example, comparing a prediction of the ML model and corresponding ground truth data thereof, and comparing changes in internal configuration for analytics ID generation, previous existing records of analytics accuracy information, and the like.

Steps 4 and 5. When analytics accuracy of the ML model is insufficient, i.e. when deviation of an analytics output using the trained ML model from real data (which is collected from a data generator network function (e.g. Network Function, NF), and corresponds to the requested analytics ID at a time which the prediction refers to) is greater than the reporting threshold (locally configured or received in the subscription request) or when the reporting period indicated in the subscription request is reached, the NWDAF containing the AnLF sends an Nnwdaf_MLModelMonitor_Notify request to a notification endpoint (for example, the NWDAF containing the MTLF). The Notify request includes analytics accuracy information of the ML model (for example, a deviation value indicating the deviation of the prediction generated using the ML model from the data and network data (which may be used by the NWDAF containing the MTLF for possible ML model retraining) when the deviation occurs), and optionally an indication that analytics accuracy of the ML model does not meet an accuracy requirement of the ML model.

Step 6. The NWDAF containing the MTLF sends a response.

Step 7. When a plurality of pieces of analytics accuracy information have been received from one or more NWDAFs containing the AnLF, it may be considered that the ML model is degraded/to be updated (i.e. a sufficient quantity of pieces of analytics accuracy information have been received from one or more NWDAFs containing the AnLF, indicating insufficient analytics accuracy).

It should be noted that an actual mechanism by which the NWDAF containing the MTLF determines degradation of the ML model is an internal program of the NWDAF containing the MTLF, for example, the NWDAF containing the MTLF calculates global accuracy based on the analytics accuracy information and a quantity of inferences received from a plurality of NWDAFs containing the AnLF.

Step 8. When it is considered that the ML model is degraded/to be updated, the NWDAF containing MTLF retrains the existing ML model or selects a new ML model. If the network data is not included in the Nnwdaf_MLModelMonitor_Notify request in step 5, the NWDAF containing the MTLF may request the data from the NWDAF containing the AnLF, an ADREF, and/or another 5GS entity, and use the collected data for ML model retraining. For example, the NWDAF containing the MTLF notifies the NWDAF containing the AnLF of updated trained ML model information by invoking the Nnwdaf_MLModelProvision_Notify service operation.

### 3. Subscription process of analytics accuracy information

With this service, an NF consumer of an analytics ID performs subscription, as well as receives an analytics output and analytics accuracy information related to the data analytics ID. For example, a process of accuracy information subscription and provisioning may include the following steps:
Step 1. The NWDAF service consumer selects an appropriate NWDAF containing an AnLF according to clause 5.2 of 3GPP TS 23.288, and subscribes to analytics accuracy information by invoking an Nnwdaf_AnalyticsSubscription_Subscribe service operation. Parameters that may be included in the subscription to trigger accuracy information checking and provisioning are listed in clause 6.1.3 of 3GPP TS 23.288.
Step 2. When a subscription request is received, the NWDAF containing the AnLF determines whether the subscription is only used to generate an analytics output, or whether the subscription includes an analytics accuracy request.

If the analytics accuracy request is included, the NWDAF containing the AnLF starts analytics accuracy monitoring, and generation, based on the parameters defined in the analytics accuracy request information, of analytics accuracy information related to the analytics ID indicated in the subscription. The NWDAF containing the AnLF calculates the analytics accuracy information by comparing a prediction with corresponding ground truth data.

The NWDAF containing the AnLF has started to perform analytics accuracy monitoring and analytics accuracy information generation, which may have been previously triggered by another NWDAF service consumer.

**In** addition to the request received from the NWDAF service consumer, the NWDAF containing the AnLF may determine, based on the local policy, to start analytics accuracy monitoring and analytics accuracy information generation.

Step 3. The NWDAF containing the AnLF performs data collection and generates the analytics output.

It should be noted that whether and how additional steps are required to describe data collection for determining analytics accuracy depend on a fast file system (Fast File System, FFS). In addition, whether and how the FFS divides "input data collection" and "ground truth (ground truth) data collection" into two different steps lie in that the two operations are performed in totally different timestamps.

Step 4a. Provide the analytics output based on the parameters defined in the analytics reporting information included in the subscription request.

Step 4b. The NWDAF containing the AnLF provides the analytics accuracy information for the analytics ID based on the parameters defined in the analytics accuracy request information included in the subscription request.

Step 5. When it is determined that accuracy for the analytics ID is low or insufficient, i.e. when deviation of an analytics output using the trained ML model from the ground truth data (the data is collected from a data producer NF, and corresponds to the requested analytics ID at a time which the prediction refers to) is greater than the reporting threshold (locally configured or received in the subscription request), the NWDAF containing the AnLF may notify the NWDAF service consumer with a stop analytics output consumption indication and a stop analytics output consumption time window.

Step 6. (Optional) The NWDAF service consumer may decide, based on own logic thereof or based on the notification that is received from the NWDAF and that has the stop analytics output consumption indication, to stop analytics output consumption, without unsubscribing to the analytics ID. The NWDAF service user invokes the Nnwdaf_Analytics Subscription_AnalyticsSubscription_Subscribe service operation, including a subscription correlation (Subscription Correlation) ID, to modify existing subscription, and provides a parameter, i.e. a pause analytics subscription request (Pause Analytics Subscription request) in the analytics accuracy request information (Analytics Accuracy request Information).

Step 7. When the NWDAF determines that the accuracy for the analytics ID is improved (for example, meets the accuracy requirement of the analytics consumer) or when the pause analytics subscription time window requested by the NWDAF service consumer ends, reactivate the existing subscription that is to the analytics ID and that has previously been stopped.

Step 8. (Optional) The NWDAF service consumer may notify, based on own logic thereof, the NWDAF service consumer (Service Consumer) to resume the supply of the analytics output, thereby reactivating the existing subscription that is to the analytics ID and that has been paused by the NWDAF services consumer request (step 6) or the NWDAF indication (step 5). The NWDAF service user invokes the Nnwdaf_AnalyticsSubscription_Subscribe service operation, including a subscription correlation ID, to modify the existing subscription, and provides a parameter, i.e. a resume analytics subscription request (Resume Analytics Subscription request) in the analytics accuracy request information.

An information processing method provided in the embodiments of this application is described in detail below with reference to the accompanying drawing by using some embodiments and application scenarios thereof.

Referring to FIG. 2, FIG. 2 is a flowchart of an information processing method according to an embodiment of this application. The method may be performed by a first network function. As shown in FIG. 2, the method includes the following steps.

Step 201. The first network function performs inference on analytics based on at least two models to obtain a first inference result.

In this embodiment, the foregoing first network function may include a network function that can perform data analytics, for example, an AnLF, an NWDAF, or an NWDAF containing an AnLF. A second network function may be a network function that triggers the foregoing analytics. For example, the foregoing second network function may be a consumer network function (i.e. a consumer NF), for example, an SMF or an AF. Alternatively, the foregoing second network function may be an MTLF, an NWDAF, or an NWDAF containing an MTLF.

The foregoing model may be an ML model, an artificial intelligence (Artificial Intelligence, AI) model, or the like. For example, the MTLF, the NWDAF, or the NWDAF containing the MTLF may perform training based on training data to obtain the foregoing model. The foregoing at least two models each support inference on the foregoing analytics. The foregoing at least two models may be from a same network function, for example, from a same MTLF. Alternatively, the foregoing at least two models may be from different network functions, for example, from different MTLFs. It should be further noted that algorithms or structures of the foregoing at least two models may be the same or different.

For example, the MTLF sends, to the AnLF, the NWDAF, or the NWDAF containing the AnLF, an AI model, an ML model, or the like that is obtained through training. For example, the foregoing AI model, ML model, or the like may be sent by using an ML model provision notification (i.e. Nnwdaf_MLModelProvision_Notify) message or an ML model information response (i.e. Nnwdaf_MLModelInfo_Response) message.

In some optional embodiments, before step 201, the first network function may receive analytics request information from the second network function, and the analytics request information may include but is not limited to at least one of the following: an analytics ID (i.e. an analytics ID), analytics description information, and an accuracy monitoring request. The foregoing analytics ID may be an identifier of an inference task, an identifier of a data analytics task, or the like. The foregoing analytics description information may include analytics filter information (i.e. analytics filter information) (for example, inference task/data analytics condition constraint information, used to limit a range of execution of an inference task, including a time range, an area range, and the like). For example, the second network function may send the foregoing analytics request information by using an analytics subscription (i.e. Nnwdaf_AnalyticsSubscription_Subscribe) message or an analytics information request (i.e. Nnwdaf_AnalyticsInfo_Request) message. In this case, the first network function performing inference on the analytics based on the at least two models may be triggered by receiving the foregoing analytics request information. In some optional embodiments, the first network function may proactively trigger the process of performing inference on the analytics based on the at least two models. For example, for a verification test phase, the first network function may simulate triggering of the inference task by itself to measure accuracy for model inference.

For the foregoing step 201, for example, the first network function may separately perform inference on the analytics based on different models in the foregoing at least two models in different time periods or different areas, to obtain at least two inference results (i.e. inference results corresponding to the different time periods or the different areas), and determine the foregoing first inference result based on the at least two inference results. Alternatively, the first network function may separately perform inference on the analytics based on each of the at least two models in a same time period or a same area, to obtain at least two inference results, and determine the foregoing first inference result based on the at least two inference results.

For the determining the foregoing first inference result based on the at least two inference results, for example, an average value of the foregoing at least two inference results may be used as the foregoing first inference result, or an intersection set of the foregoing at least two inference results may be used as the foregoing first inference result, or an inference result that most frequently occurs in the foregoing at least two inference results may be used as the foregoing first inference result. In some optional embodiments, the first network function may further determine the first inference result based on the foregoing at least two inference results and according to internal logic, pre-configuration, or the like. For example, the first inference result may be determined from the foregoing at least two inference results based on at least one of a difference between algorithms of models, deviation of data distribution during model training, evaluation performed on the inference result, or the like.

It should be noted that the foregoing analytics may also be referred to as a data analytics (analytics) task, an inference task, a prediction task, or the like. The foregoing inference result may also be referred to as a data analytics result (analytics output), a data processing result, a prediction result (prediction), or the like. This is not limited in this embodiment.

For example, the first network function (for example, the AnLF) may determine to-be-obtained data (for example, a type of input data of the model or a data source device of the input data) based on model information and/or analytics information, collect corresponding input data, and then input the input data into the foregoing model for inference to obtain an inference result.

It may be understood that after obtaining the first inference result, the first network function may send the first inference result to the second network function. For example, the first network function may send the first inference result to the second network function by using an analytics subscription notification (i.e. Nnwdaf_AnalyticsSubscription_Notify) message or an analytics information response (i.e. Nnwdaf_AnalyticsInfo_Response) message. Then, the second network function may perform policy decision based on the foregoing first inference result, for example, assist UE mobility (mobility) statistics or assist an AMF in performing user paging optimization.

Step 202. The first network function determines first accuracy information, where the first accuracy information is used to indicate accuracy for the first inference result or accuracy for an inference result corresponding to the analytics.

In this embodiment, the first network function may determine the first accuracy information based on the inference results that are output by the at least two inference models and ground truth corresponding to the inference results, where the ground truth corresponding to the inference results may be understood as actual data, real data, or target data corresponding to the inference results, for example, true, ground truth (ground truth), or a label (label).

The foregoing first accuracy information is used to indicate or evaluate the accuracy for the first inference result or the inference result of the foregoing analytics. For example, the foregoing first accuracy information may include but is not limited to at least one of the following evaluation metric values: correctness (correctness), accuracy (accuracy), precision (precision), recall (recall), a mean squared error (Mean Squared Error, MAE), deviation (deviation), a mean absolute error (Mean Absolute Error, MSE), and the like. For example, the foregoing deviation may be a difference between an inference result and real data.

It should be noted that expression forms of the foregoing first accuracy information include but are not limited to a percentage value (for example, 90%), a classification expression form (for example, high, medium, low), a normalized value (for example, 0.9), or the like. In addition, the foregoing accuracy information may also be referred to as an accuracy metric value, an accuracy metric value, accuracy information, or the like. This is not limited in this embodiment.

It should be noted that the accuracy information may indicate accuracy for an inference result of a first model for the analytics from a positive perspective or a negative perspective. For example, correctness of the inference result indicates the accuracy from the positive perspective. An error rate or an inference error indicates the accuracy from the negative perspective.

Step 203. The first network function sends first information to the second network function based on the first accuracy information, where the first information includes at least one of the following:
first indication information, where the first indication information is used to indicate that the accuracy for the inference result corresponding to the analytics or the first inference result decreases or does not meet an accuracy requirement;
the first accuracy information;
a metric type corresponding to the first accuracy information;
a problem type corresponding to the first accuracy information;
second indication information, where the second indication information is used to indicate a recommended operation for the second network function; and
third indication information, where the third indication information is used to indicate a time at which the accuracy for the inference result corresponding to the analytics or the first inference result recovers to meet a preset accuracy requirement.

In this embodiment, the metric type corresponding to the first accuracy information may include but is not limited to correctness, accuracy, precision, recall, a mean squared error, deviation, a mean absolute error, or the like. That the metric type includes accuracy and recall is used as an example. The foregoing first information may include: accuracy, value a; and recall, value b.

The problem type corresponding to the first accuracy information may include but is not limited to at least one of a classification (classification) problem, a regression (regression) problem, and a clustering (clustering) problem. The foregoing problem type is a problem type generated from classifying common problems in the AI field, or may be supervised learning, unsupervised learning, or the like.

The foregoing second indication information is used to indicate the recommended operation for the second network function. For example, in a case that the first accuracy information indicates that the accuracy for the first inference result is relatively low, the foregoing second indication information may be used to indicate the second network function to stop using the foregoing first inference result.

The foregoing third indication information is used to indicate the time at which the accuracy for the inference result corresponding to the analytics or the first inference result recovers to meet the preset accuracy requirement, so that the second network function can determine, based on the second indication information, how long the second network function needs to wait.

For example, the first network function may determine the first information based on the first accuracy information, and send the first information to the second network function, or the first network function may send the first information to the second network function in a case that the first accuracy information meets a first condition. For example, the first network function may send the foregoing first information to the second network function by using an analytics subscription notification (i.e. an Nnwdaf_AnalyticsSubscription_Notify) message. After receiving the foregoing first information, the second network function may perform a corresponding operation based on the foregoing first information, for example, stop using the inference result from the first network function, or continue to use the inference result from the first network function, or request the inference result corresponding to the foregoing analytics from another network function.

It should be noted that, when the foregoing second network function is a network function (for example, an MTLF) that performs model training, information requested by the foregoing second network function and information fed back by the first network function are accuracy information for the model.

According to the information processing method provided in this embodiment of this application, the first network function performs inference on the analytics based on the at least two models to obtain the first inference result, determines the first accuracy information, and sends the first information to the second network function based on the first accuracy information, where the first information includes at least one of the following: the first indication information, where the first indication information is used to indicate that the accuracy for the inference result corresponding to the analytics or the first inference result decreases or does not meet the accuracy requirement; the first accuracy information; the metric type corresponding to the first accuracy information; the problem type corresponding to the first accuracy information; the second indication information, where the second indication information is used to indicate the recommended operation for the second network function; and the third indication information, where the third indication information is used to indicate the time at which the accuracy for the inference result corresponding to the analytics or the first inference result recovers to meet the preset accuracy requirement. In other words, in this embodiment of this application, the first network function performs inference on the analytics based on a plurality of models, performs accuracy monitoring on the inference result, and provides feedback to the second network function. This not only helps improve reliability and accuracy for the inference result that is of the analytics and that is obtained by the first network function, but also helps the second network function learn of accuracy for the inference result of the analytics thereof, thereby reducing a case in which the second network function uses an inference result with a relatively low accuracy.

Optionally, that the first network function sends first information to the second network function based on the first accuracy information includes the following:
in a case that the first accuracy information meets a first condition, the first network function sends the first information to the second network function.

For example, the first network function may send the first information to the second network function in a case that the first accuracy information indicates that the accuracy for the first inference result is relatively low, so that the first network function can perform a corresponding operation based on the foregoing first information.

In some optional embodiments, in a case that the first accuracy information does not meet the first condition, the first network function may not send the foregoing first information to the second network function.

Optionally, the first accuracy information meeting the first condition includes at least one of the following:
the first accuracy information reaches or crosses a first preset value that is set in the first network function;
the first accuracy information reaches or crosses a second preset value received by the first network function; and
the first accuracy information reaches or crosses second accuracy information, where the second accuracy information is determined based on received accuracy information of the at least two models.

The foregoing "reach" may be understood as "equal to". The foregoing "cross" (across) may include two cases: "greater than" or "less than". Specifically, in a case that the first accuracy information is positively correlated with accuracy (for example, correctness or precision), that the first accuracy information crosses the first preset value, the second preset value, or the second accuracy information may be understood as that the first accuracy information is less than the first preset value, the second preset value, or the second accuracy information. In a case that the first accuracy information is negatively correlated with accuracy (for example, deviation or a mean absolute error), that the first accuracy information crosses the first preset value, the second preset value, or the second accuracy information may be understood as that the first accuracy information is greater than the first preset value, the second preset value, or the second accuracy information.

For example, the foregoing second preset value may be carried in an accuracy monitoring request. For example, the accuracy monitoring request sent by the second network function to the first network function includes the foregoing second preset value.

For example, the foregoing second accuracy information may be determined based on accuracy information of the foregoing at least two models during training. For example, when the MTLF sends a model to the first network function, the MTLF may send accuracy information of the model. The first network function determines the second accuracy information based on the accuracy information of the foregoing at least two models. For example, an average value of the accuracy information of the foregoing at least two models may be used as the second accuracy information, or accuracy information that most frequently occurs in the accuracy information of the foregoing at least two models may be used as the second accuracy information.

Optionally, that the first network function performs inference on analytics based on at least two models to obtain a first inference result includes the following:
the first network function separately performs inference on the analytics based on the at least two models to obtain at least two inference results, and aggregates the at least two inference results to obtain the first inference result; or
the first network function divides a first time period into at least one sub-time period, performs inference on the analytics based on one of the at least two models in each sub-time period to obtain an inference result corresponding to each sub-time period, and aggregates the inference result corresponding to the at least one sub-time periods to obtain the first inference result corresponding to the first time period; or
the first network function divides a first area into at least one sub-area, performs inference on the analytics based on one of the at least two models for each sub-area to obtain an inference result corresponding to each sub-area, and aggregates the inference result corresponding to the at least one sub-area to obtain the first inference result corresponding to the first area.

Alternatively, the first network function separately performs inference on the analytics based on different models in different time periods to obtain inference results corresponding to the different time periods, and aggregates the inference results corresponding to the different time periods to obtain the first inference result.

**In** an implementation, the first network function separately performs inference on the analytics based on the at least two models to obtain at least two inference results. For example, in a first time period or a first area, the first network function separately performs inference on the analytics based on each of the at least two models to obtain at least two inference results corresponding to the first time period or the first area, to aggregate the at least two inference results to obtain the first inference result. For example, an average value of the foregoing at least two inference results may be used as the foregoing first inference result, or an intersection set of the foregoing at least two inference results may be used as the foregoing first inference result, or an inference result that most frequently occurs in the foregoing at least two inference results may be used as the foregoing first inference result. That is, in this implementation, inference is performed on the analytics by using a plurality of models for a same time period or a same area, to obtain a plurality of inference results. The foregoing first time period may be any time period, and the foregoing first area may be any area.

In another implementation, the first network function divides a first time period into at least one sub-time period, performs inference on the analytics based on one of the at least two models in each sub-time period to obtain an inference result corresponding to each sub-time period, and aggregates the inference results corresponding to the sub-time periods to obtain the first inference result corresponding to the first time period. That is, in this implementation, for different sub-time periods, inference is performed by using different models in the foregoing at least two models to obtain an inference result corresponding to each sub-time period, and the inference results corresponding to the plurality of sub-time periods are aggregated to obtain the first inference result. For a specific implementation process of aggregating the inference results corresponding to the plurality of sub-time periods, refer to related descriptions in the foregoing embodiments. Details are not described herein again.

In another implementation, the first network function divides a first area into at least one sub-area, performs inference on the analytics based on one of the at least two models for each sub-area to obtain an inference result corresponding to each sub-area, and aggregates the inference results corresponding to the sub-areas to obtain the first inference result corresponding to the first area. That is, in this implementation, for different sub-areas, inference is performed by using different models in the foregoing at least two models to obtain an inference result corresponding to each sub-area, and the inference results corresponding to the plurality of sub-areas are aggregated to obtain the first inference result. For a specific implementation process of aggregating the inference results corresponding to the plurality of sub-areas, refer to related descriptions in the foregoing embodiments. Details are not described herein again.

Optionally, that the first network function determines first accuracy information includes the following:
the first network function obtains ground truth corresponding to the first inference result; and
the first network function obtains the first accuracy information based on the first inference result and the ground truth corresponding to the first inference result.

The ground truth (ground truth) corresponding to the first inference result may be understood as actual data, real data, target data, or the like corresponding to the first inference result. For example, the first network function may determine the to-be-obtained ground truth (for example, a ground truth type of the model and a data source device of the ground truth) based on model information and/or analytics information, and then obtain, from the data source device, the ground truth corresponding to the first inference result. For example, the ground truth corresponding to the first inference result may be obtained from the data source device by using event exposure subscription (i.e. Nnf_EventExposure_Subscirbe) signaling.

In this embodiment, the first accuracy information is directly obtained based on the first inference result and the ground truth corresponding to the first inference result. This is relatively easy to implement, and can also ensure that the obtained first accuracy information can relatively accurately reflect the accuracy for the first inference result.

Optionally, that the first network function determines first accuracy information includes the following:
the first network function determines sub-accuracy information corresponding to each of the at least two models; and
the first network function determines the first accuracy information based on the sub-accuracy information corresponding to each model.

For example, the first network function may perform inference on the analytics based on each model to obtain an inference result corresponding to each model, obtain ground truth corresponding to the inference result corresponding to each model, and determine, based on the inference result corresponding to each model and the ground truth corresponding to the inference result, the sub-accuracy information corresponding to each model.

After obtaining the sub-accuracy information corresponding to each of the at least two models, i.e. at least two pieces of sub-accuracy information, the first network function may determine the first accuracy information based on the at least two pieces of sub-accuracy information. For example, an average value of the at least two pieces of sub-accuracy information may be used as the foregoing first accuracy information, or a median of the at least two pieces of sub-accuracy information may be used as the foregoing first accuracy information.

For example, the AnLF performs inference by using five models, to generate the first inference result. When calculating the accuracy information of the first inference result, the AnLF may separately calculate accuracy information of the five models, for example, 50%, 80%, 70%, 90%, and 90%, and then aggregate the five pieces of accuracy information, for example, in an averaging manner. In this case, the accuracy information that is of the first inference result and that is generated based on the five models is 76%.

Optionally, the method further includes the following:
the first network function sends a first request message to a third network function, where
the first request message includes accuracy monitoring capability information of the first network function, and the first request message is used to request registration of an accuracy monitoring capability of the first network function.

The third network function may be any network function that has a storage function, for example, may be an NRF. The accuracy monitoring capability information of the first network function may be used to indicate that the first network function has the accuracy monitoring capability. The foregoing first request message may be sent to the third network function by using a message such as NFR registration (i.e. Nnrf_NFManagement_NFRegister). The third network function may store the accuracy monitoring capability information of the first network function.

It may be understood that, in addition to the foregoing accuracy monitoring capability information of the first network function, the foregoing first request message may further include parameters such as a network function type, a network function instance identifier, and network function address information.

In this embodiment, the first network function sends the first request message to the third network function to request to registration of the accuracy monitoring capability of the first network function. In this way, a consumer network function can quickly find a network function that can perform accuracy monitoring for analytics processing.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

The first network function having the model accuracy monitoring capability may be understood as comparing an inference result of a model with ground truth that corresponds to an inference result and that is collected from a network, to obtain accuracy information, analytics accuracy information, or the like corresponding to the model. The foregoing analytics accuracy monitoring capability may be understood as comparing an output result of analytics with ground truth that corresponds to an output result and that is collected from a network, to obtain accuracy information, analytics accuracy information, or the like corresponding to the analytics. The model accuracy monitoring capability (ML model accuracy monitoring capability) may also be referred to as a model accuracy checking capability (ML model accuracy checking capability), a model accuracy supervision capability, or the like. The analytics accuracy monitoring capability (analytics accuracy monitoring capability) may also be referred to as an analytics accuracy checking capability (analytics accuracy checking capability) or the like.

Optionally, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

It may be understood that the first network function having the analytics accuracy monitoring capability means that the first network function has a capability of generating accuracy information of an inference result corresponding to analytics, and the like, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

The foregoing analytics accuracy monitoring capability based on a single model (i.e. per model) may be understood as supporting monitoring accuracy for an inference result of a single model of analytics.

The foregoing analytics accuracy monitoring capability based on a plurality of models may be understood as supporting monitoring accuracy for inference results of a plurality of models of analytics.

Optionally, the first capability information includes identifier information of at least one model.

In this embodiment, the foregoing model accuracy monitoring capability may be for a model identified by using the identifier information of the foregoing at least one model.

In some optional embodiments, in a case that the first capability information does not include the identifier information of the model, the foregoing model accuracy monitoring capability may be for any model or all models.

Optionally, the second capability information includes identifier information of at least one analytics task.

In this embodiment, the foregoing analytics accuracy monitoring capability may be for analytics identified by using the identifier information of the foregoing at least one analytics task.

In some optional embodiments, in a case that the second capability information does not include the identifier information of the analytics task, the foregoing analytics accuracy monitoring capability may be for any analytics or all analytics.

It may be understood that an identifier of the foregoing analytics may be an analytics ID (analytics ID) or the like.

It may be understood that the foregoing any analytics or all analytics may be any analytics ID (analytics ID), all analytics categories, or the like.

Optionally, the second network function is a network function that requests the analytics.

In this embodiment, the foregoing network function that requests the analytics may be understood as a network function that requests analytics or a network function that triggers analytics, for example, a consumer network function (i.e. a consumer NF), for example, an SMF or an AF.

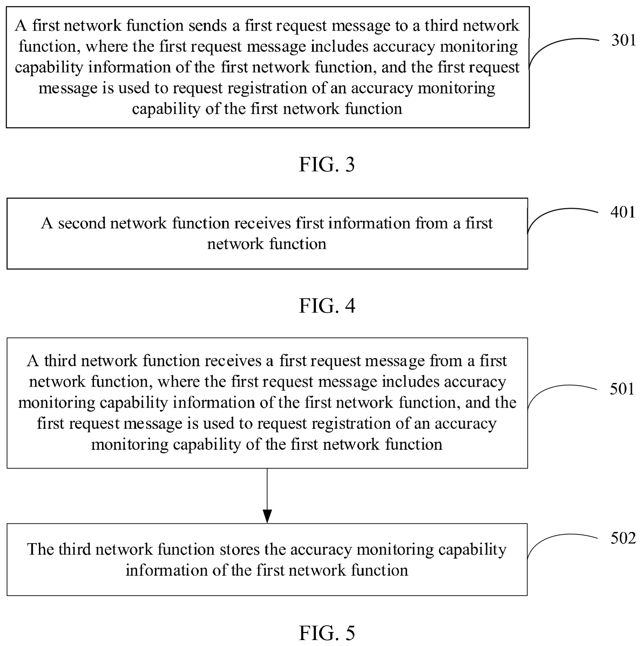

Referring to FIG. 3, FIG. 3 is a flowchart of another information processing method according to an embodiment of this application. The method may be performed by a first network function. As shown in FIG. 3, the method includes the following steps.

Step 301. The first network function sends a first request message to a third network function, where
the first request message includes accuracy monitoring capability information of the first network function, and the first request message is used to request registration of an accuracy monitoring capability of the first network function.

In this embodiment, the foregoing first network function may include but is not limited to a network function such as an AnLF, an MTLF, an NWDAF, or the like. The third network function may be any network function that has a storage function, for example, may be an NRF.

The accuracy monitoring capability information of the first network function may be used to indicate that the first network function has the accuracy monitoring capability. The foregoing first request message may be sent to the third network function by using signaling such as NFR registration (i.e. Nnrf_NFManagement_NFRegister). The third network function may store the accuracy monitoring capability information of the first network function.

It may be understood that, in addition to the foregoing accuracy monitoring capability information of the first network function, the foregoing first request message may further include parameters such as a network function type, a network function instance identifier, and network function address information.

In this embodiment of this application, the first network function sends the first request message to the third network function to request to registration of the accuracy monitoring capability of the first network function. In this way, a consumer network function can quickly find a network function that can perform accuracy monitoring for analytics processing.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

Optionally, the first network function having the model accuracy monitoring capability means that the first network function has a capability of generating accuracy information of an inference result corresponding to a model. Alternatively, it may be understood that, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

Optionally, the first capability information includes identifier information of at least one model.

Optionally, the second capability information includes identifier information of at least one analytics task.

It should be noted that, for an implementation of the foregoing implementations, refer to related descriptions in the foregoing embodiments. Details are not described herein again.

Referring to FIG. 4, FIG. 4 is a flowchart of an information processing method according to an embodiment of this application. The method may be performed by a second network function. As shown in FIG. 4, the method includes the following steps.

Step 401. The second network function receives first information from a first network function, where the first information includes at least one of the following:
first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, where the first accuracy information is used to indicate the accuracy for the inference result corresponding to the analytics or the first inference result;
a metric type corresponding to the first accuracy information;
a problem type corresponding to the first accuracy information;
second indication information, where the second indication information is used to indicate a recommended operation for the second network function; and
third indication information, where the third indication information is used to indicate a time at which the accuracy for the inference result corresponding to the analytics or the first inference result recovers to meet a preset accuracy requirement.

Optionally, the method further includes the following:
the second network function performs a first operation based on the first information.

For example, the second network function may stop using the first inference result received from the first network function, or the second network function may request another network function to perform inference on the foregoing analytics and return a corresponding inference result or the like.

Optionally, the first operation includes at least one of the following:
stopping using the first inference result received from the first network function, or continuing to use the first inference result received from the first network function; and
requesting the inference result corresponding to the analytics from a fourth network function.

The stopping using the first inference result received from the first network function may include at least one of stopping using the first inference result received from the first network function currently and stopping using the first inference result received from the first network function subsequently or in the future.

The continuing to use the first inference result received from the first network function may be, for example, continuing to use the first inference result received from the first network function currently. In some optional embodiments, the second network function may reduce a decision weight of using the first inference result. For example, in a case that a degree of decline in the accuracy of the model does not exceed a preset value, the second network function may reduce the decision weight of using the first inference result.

The foregoing fourth network function may be any network function that is different from the first network function and that can perform data analytics, for example, an AnLF. Specifically, the second network function may send a data analytics request to the fourth network function, to request to perform data analytics on the foregoing analytics, and receive an inference result returned by the fourth network function for the foregoing data analytics request.

In this embodiment, in a case that the second network function receives the first information, the second network function performs at least one of the following: stopping using the first inference result received from the first network function or continuing to use the first inference result received from the first network function, and requesting the inference result corresponding to the analytics from the fourth network function. In this way, a case in which the second network function uses an inference result with a relatively low accuracy can be reduced, so that accuracy of decision-making by the second network function based on the inference result can be improved.

Optionally, the method further includes the following:
the second network function sends a first discovery request to a third network function, where the first discovery request is used to request to discover a network function that has an accuracy monitoring capability; and
the second network function receives feedback information from the third network function, where the feedback information is used to indicate at least one network function that has the accuracy monitoring capability.

The third network function may be any network function that has a storage function, for example, an NRF. The third network function may be pre-registered with the accuracy monitoring capability of the at least one network function.

For example, the second network function may send the first discovery request to the third network function by using a network function discovery request (i.e. Nnrf_NFDiscovery _Request) or the like. The foregoing first discovery request may include at least one of the following:
target network function service information (i.e. a target NF service name), where if a target service is a request for data analytics information, the target network function service information may be Nnwdaf_AnalyticsInfo_Request, Nnwdaf_MLModelMonitor_Subscribe, or the like; and
a type of a target network function (i.e. an NF type of a target NF), where if a network function of the target service is an NWDAF, the type of the target network function may be an NWDAF type (i.e. an NWDAF type).

Specifically, after receiving the first discovery request, the third network function may discover the network function that has the accuracy monitoring capability, and send the feedback information to the second network function. For example, the third network function may send the feedback information to the second network function by using a network function discovery request response (Nnrf_NFDiscovery_Request Response). The feedback information may include information about the network function that has the accuracy monitoring capability.

Optionally, the information about the network function may include but is not limited to at least one of the following:
network function device identifier information, indicating a fully qualified domain name (Fully Qualified Domain Name, FQDN), an IP address, and the like of a target network function or device; and
a type of a network function device, such as an NWDAF type.

In some optional embodiments, the foregoing feedback information may further include accuracy monitoring capability information of the discovered network function, to indicate that a corresponding network function has the accuracy monitoring capability.

In some optional embodiments, the foregoing accuracy monitoring capability information may include at least one of the following:
first capability information, where the first capability information is used to indicate that the corresponding network function has a model accuracy monitoring capability; and
second capability information, where the second capability information is used to indicate that the corresponding network function has an analytics accuracy monitoring capability.

Optionally, the first discovery request includes accuracy monitoring capability requirement information, and the accuracy monitoring capability requirement information is used to indicate to discover a network function that has the accuracy monitoring capability.

Optionally, the accuracy monitoring capability requirement information includes at least one of the following:
first capability requirement information, where the first capability requirement information is used to indicate to discover a network function that has the model accuracy monitoring capability; and
second capability requirement information, where the second capability requirement information is used to indicate to discover a network function that has the analytics accuracy monitoring capability.

It may be understood that, after the second network function receives the feedback information, if the feedback information indicates one network function, the second network function may send an accuracy monitoring request to the network function; or if the feedback information indicates a plurality of network functions, the second network function may select one network function from the plurality of network functions to send the accuracy monitoring request.

This embodiment of this application further provides an information processing method. The method may be performed by a second network function. The method includes: the second network function sends a first discovery request to a third network function, where the first discovery request is used to request to discover a network function that has an accuracy monitoring capability; and the second network function receives feedback information from the third network function, where the feedback information is used to indicate at least one network function that has the accuracy monitoring capability.

It should be noted that the second network function herein may be a network function that makes an analytics request, such as a consumer network function, or may be a network function that performs model training, such as an MTLF.

It should be noted that, for an implementation of this implementation, refer to related descriptions in the foregoing embodiments. Details are not described herein again.

Optionally, the second network function determines a fifth network function based on the feedback information, and sends an accuracy monitoring request to the fifth network function.

For the fifth network function, if the feedback information indicates one network function, the fifth network function is the network function. If the feedback information indicates a plurality of network functions, the fifth network function may be one network function selected from the plurality of network functions.

It should be noted that, after receiving the accuracy monitoring request sent by the second network function, the fifth network function may perform an operation the same as or similar to that of the first network function.

Referring to FIG. 5, FIG. 5 is a flowchart of an information processing method according to an embodiment of this application. The method may be performed by a network-side device. As shown in FIG. 5, the method includes the following steps.

Step 501. A third network function receives a first request message from a first network function, where the first request message includes accuracy monitoring capability information of the first network function, and the first request message is used to request registration of an accuracy monitoring capability of the first network function.

Step 502. The third network function stores the accuracy monitoring capability information of the first network function.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

Optionally, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

Optionally, the first capability information includes:
identifier information of at least one model.

Optionally, the second capability information includes:
identifier information of at least one analytics task.

Optionally, the method further includes the following:
the third network function receives a first discovery request from a second network function, where the first discovery request is used to discover a network function that has the accuracy monitoring capability; and
the third network function sends feedback information to the second network function, where the feedback information is used to indicate at least one network function that has the accuracy monitoring capability.

Optionally, the first discovery request includes accuracy monitoring capability requirement information, and the accuracy monitoring capability requirement information is used to indicate to discover a network function that has the accuracy monitoring capability.

Optionally, the accuracy monitoring capability requirement information includes at least one of the following:
first capability requirement information, where the first capability requirement information is used to indicate to discover a network function that has the model accuracy monitoring capability; and
second capability requirement information, where the second capability requirement information is used to indicate to discover a network function that has the analytics accuracy monitoring capability.

It should be noted that, for an implementation of the foregoing implementations, refer to related descriptions in the foregoing embodiments. Details are not described herein again.

The following describes examples of the embodiments of this application by using different cases.

Case 1: Inference is performed based on a plurality of models, and accuracy information of inference results generated by the plurality of models is monitored and calculated.

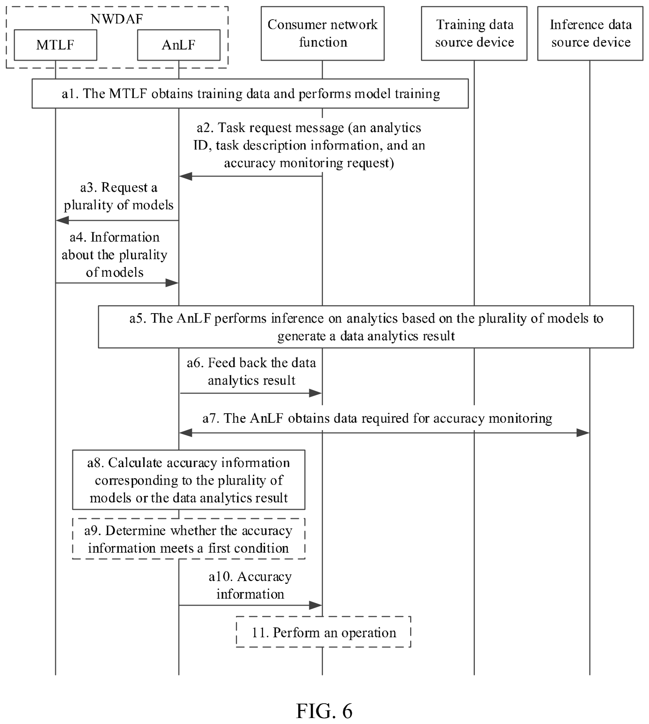

As shown in FIG. 6, an embodiment of this application provides an information processing method, including the following steps.

Step a1. An MTLF obtains training data and performs model training.

Step a2. An AnLF receives an analytics request message from a consumer network function, where the analytics request message includes at least one of the following: an analytics ID, analytics description information, and an accuracy monitoring request.

Step a3. The AnLF requests a plurality of models.

Step a4. The AnLF obtains information about the plurality of models.

It should be noted that step a3 and step a4 do not necessarily follow step a2. For example, before step a2, the AnLF has received a similar task and requested a model from the MTLF.

Optionally, in step a3, the AnLF requests to obtain a plurality of models, and in step a4, the MTLF feeds back the plurality of models. Alternatively, in step a3, the AnLF obtains a plurality of models from a plurality of MTLFs, and in step a4, the plurality of MTLFs feed back the plurality of models.

Step a5. The AnLF performs inference on analytics based on the plurality of models to generate a data analytics result, i.e. the foregoing first inference result.

Step a6. The AnLF feeds back the data analytics result.

Step a7. The AnLF obtains data required for accuracy monitoring.

The data required for accuracy monitoring may include ground truth corresponding to the foregoing data analytics result. For example, the to-be-obtained ground truth (for example, a ground truth type of the model and a data source device of the ground truth) may be determined based on model information and/or analytics information, and then the ground truth corresponding to the data analytics result is obtained from the data source device.

Optionally, the AnLF may further repeat step a5 to obtain more input data that can be used for inference, and generate another inference result by using the new input data, to calculate accuracy.

Step a8. The AnLF calculates accuracy information (i.e. the foregoing first accuracy information) corresponding to the plurality of models or the data analytics result.

Step a9. The AnLF determines that the accuracy information (i.e. the foregoing first accuracy information) meets a first condition, and then performs the following step a10.

It should be noted that, for the foregoing step a5 to step a10, refer to related descriptions in the foregoing embodiments. Details are not described herein again.

Step a10. The AnLF sends a first notification message to the consumer network function to notify the consumer network function of accuracy related information of the data analytics result sent in step a6, such as indication information indicating an accuracy decrease, a first accuracy metric value, a recommended operation (for example, stopping use), and a time period for stopping using the data analytics result.

Step a11. The consumer network function performs a corresponding operation based on the first notification message in step a10.

The operation in this step includes at least one of the following:
stopping using the data analytics result obtained from the AnLF in step a6 and/or a data analytics result received from the AnLF in the future;
continuing to use the data analytics result in step a6, where optionally, the consumer network function reduces a decision weight of using the data analytics result; and
requesting a new data analytics result corresponding to the inference task from another AnLF.

Case 2: Registration of an accuracy monitoring capability.

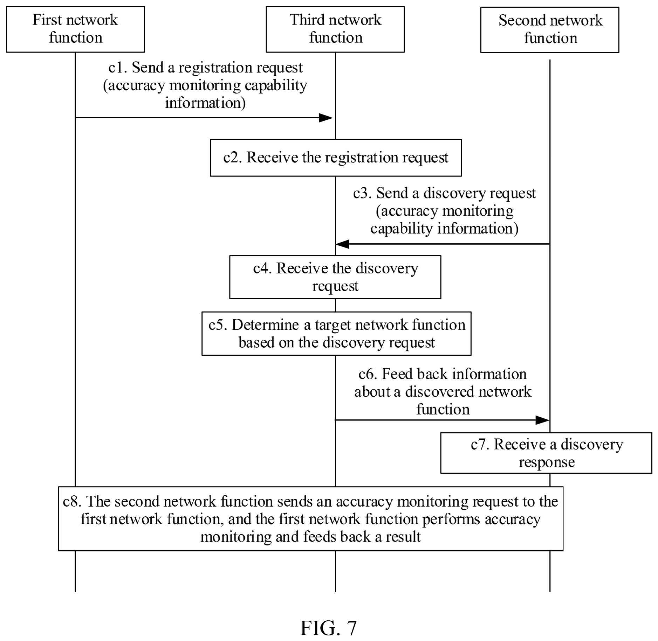

As shown in FIG. 7, an embodiment of this application provides an information processing method, including the following steps.

Step c1. A first network function sends a registration request to a third network function to request registration of a capability related to accuracy monitoring.

Step c2. The third network function receives the registration request from the first network function, and stores the registration request.

Step c3. A second network function sends a discovery request to the third network function, and may find, by including a network function requirement information, a network function that meets a requirement. Specifically, the foregoing discovery request may include accuracy monitoring capability requirement information, to indicate to discover a network function that has an accuracy monitoring capability.

Step c4. The third network function receives the discovery request from the second network function.

Step c5. The third network function determines a target network function based on the information in the discovery request. The target network function may be understood as a network function that meets the discovery request.

Step c6. The third network function feeds back information about the found network function to the second network function.

Step c7. The second network function receives the feedback information from the third network function.

The foregoing feedback information includes information about the network function that the second network function requests to find.

Optionally, the third network function may feed back information about a plurality of network function that meet the requirement, and the second network function may select one network function from the plurality of network functions to perform subsequent steps.

Step c8. The second network function sends an accuracy monitoring request to the selected network function.

It should be noted that, for related content of the foregoing step c1 to step c8, refer to related descriptions in the foregoing embodiments. Details are not described herein again.

Case 3: Processing for a case in which accuracy monitoring cannot be performed.

It should be noted that the information processing method provided in the embodiments of this application may be performed by an information processing apparatus, or a control module that is in the information processing apparatus and that is configured to perform the information processing method. In the embodiments of this application, an example in which the information processing apparatus performs the information processing method is used to describe the information processing apparatus provided in the embodiments of this application.

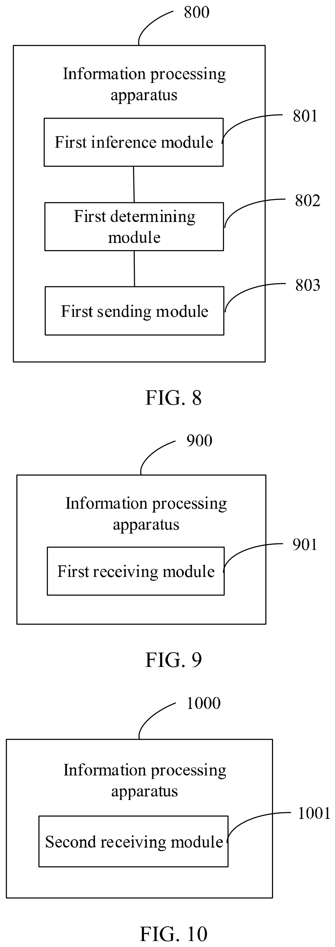

Referring to FIG. 8, FIG. 8 is a structural diagram of an information processing apparatus according to an embodiment of this application. As shown in FIG. 8, an information processing apparatus 800 includes:
a first inference module, configured to perform inference on analytics based on at least two models to obtain a first inference result;
a first determining module, configured to determine first accuracy information, where the first accuracy information is used to indicate accuracy for the first inference result or accuracy for an inference result corresponding to the analytics; and
a first sending module, configured to send first information to a second network function based on the first accuracy information, where the first information includes at least one of the following:
   first indication information, where the first indication information is used to indicate that the accuracy for the inference result corresponding to the analytics or the first inference result decreases or does not meet an accuracy requirement;
   the first accuracy information;
   a metric type corresponding to the first accuracy information;
   a problem type corresponding to the first accuracy information;
   second indication information, where the second indication information is used to indicate a recommended operation for the second network function; and
   third indication information, where the third indication information is used to indicate a time at which the accuracy for the inference result corresponding to the analytics or the first inference result recovers to meet a preset accuracy requirement.

Optionally, the first sending module is specifically configured to:
in a case that the first accuracy information meets a first condition, send the first information to the second network function.

Optionally, the first accuracy information meeting the first condition includes at least one of the following:
the first accuracy information reaches or crosses a first preset value that is set in the first network function;
the first accuracy information reaches or crosses a second preset value received by the first network function; and
the first accuracy information reaches or crosses second accuracy information, where the second accuracy information is determined based on received accuracy information of the at least two models.

Optionally, the first inference module is specifically configured to:
separately perform inference on the analytics based on the at least two models to obtain at least two inference results, and aggregate the at least two inference results to obtain the first inference result; or
divide a first time period into at least one sub-time period, perform inference on the analytics based on one of the at least two models in each sub-time period to obtain an inference result corresponding to each sub-time period, and aggregate the inference result corresponding to the at least one sub-time period to obtain the first inference result corresponding to the first time period; or
divide a first area into at least one sub-area, perform inference on the analytics based on one of the at least two models for each sub-area to obtain an inference result corresponding to each sub-area, and aggregate the inference result corresponding to the at least one sub-area to obtain the first inference result corresponding to the first area.

Optionally, the first determining module is specifically configured to:
obtain ground truth corresponding to the first inference result; and
obtain the first accuracy information based on the first inference result and the ground truth corresponding to the first inference result.

Optionally, the first determining module is specifically configured to:
determine sub-accuracy information corresponding to each of the at least two models; and
determine the first accuracy information based on the sub-accuracy information corresponding to each model.

Optionally, the first sending module is further configured to:
send a first request message to a third network function, where
the first request message includes accuracy monitoring capability information of the first network function, and the first request message is used to request registration of an accuracy monitoring capability of the first network function.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

Optionally, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

Optionally, the first capability information includes:
identifier information of at least one model.

Optionally, the second capability information includes:
identifier information of at least one analytics task.

Optionally, the second network function is a consumer network function.

The information processing apparatus in this embodiment of this application may be an electronic device, for example, an electronic device with an operating system, or may be a component, for example, an integrated circuit or a chip, in an electronic device. For example, the electronic device may be a network-side device, or may be another device other than the network-side device. For example, the network-side device may include but is not limited to the types of the network-side device 12 listed above, and the another device may be a server, a network attached storage (Network Attached Storage, NAS), or the like. This is not specifically limited in this embodiment of this application.

The information processing apparatus provided in this embodiment of this application can implement the processes implemented in the method embodiment of FIG. 2, and achieve same technical effects. To avoid repetition, details are not described herein again.

Referring to FIG. 9, FIG. 9 is a structural diagram of an information processing apparatus according to an embodiment of this application. As shown in FIG. 9, an information processing apparatus 900 includes:
a first receiving module 901, configured to receive first information from a first network function, where the first information includes at least one of the following:
first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, where the first accuracy information is used to indicate the accuracy for the inference result corresponding to the analytics or the first inference result;
a metric type corresponding to the first accuracy information;
a problem type corresponding to the first accuracy information;
second indication information, where the second indication information is used to indicate a recommended operation for a second network function; and
third indication information, where the third indication information is used to indicate a time at which the accuracy for the inference result corresponding to the analytics or the first inference result recovers to meet a preset accuracy requirement.

Optionally, the apparatus further includes:
a first execution module, configured to perform a first operation based on the first information.

Optionally, the first operation includes at least one of the following:
stopping using the first inference result received from the first network function, or continuing to use the first inference result received from the first network function; and
requesting the inference result corresponding to the analytics from a fourth network function.

Optionally, the apparatus further includes:
a third sending module, configured to send a first discovery request to a third network function, where the first discovery request is used to request to discover a network function that has an accuracy monitoring capability.

The first receiving module is further configured to receive feedback information from the third network function, where the feedback information is used to indicate at least one network function that has the accuracy monitoring capability.

Optionally, the first discovery request includes accuracy monitoring capability requirement information, and the accuracy monitoring capability requirement information is used to indicate to discover a network function that has the accuracy monitoring capability.

Optionally, the accuracy monitoring capability requirement information includes at least one of the following:
first capability requirement information, where the first capability requirement information is used to indicate to discover a network function that has a model accuracy monitoring capability; and
second capability requirement information, where the second capability requirement information is used to indicate to discover a network function that has an analytics accuracy monitoring capability.

The information processing apparatus in this embodiment of this application may be an electronic device, for example, an electronic device with an operating system, or may be a component, for example, an integrated circuit or a chip, in an electronic device. For example, the electronic device may be a network-side device, or may be another device other than the network-side device. For example, the network-side device may include but is not limited to the types of the network-side device 12 listed above, and the another device may be a server, a network attached storage (Network Attached Storage, NAS), or the like. This is not specifically limited in this embodiment of this application.

The information processing apparatus provided in this embodiment of this application can implement the processes implemented in the methods embodiment of FIG. 4, and achieve same technical effects. To avoid repetition, details are not described herein again.

Referring to FIG. 10, FIG. 10 is a structural diagram of an information processing apparatus according to an embodiment of this application. As shown in FIG. 10, an information processing apparatus 1000 includes:
a second receiving module 1001, configured to receive a first request message from a first network function, where the first request message includes accuracy monitoring capability information of the first network function, and the first request message is used to request registration of an accuracy monitoring capability of the first network function; and
a storage module, configured to store the accuracy monitoring capability information of the first network function.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

Optionally, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

Optionally, the first capability information includes:
identifier information of at least one model.

Optionally, the second capability information includes:
identifier information of at least one analytics task.

Optionally, the second receiving module is further configured to receive a first discovery request from a second network function, where the first discovery request is used to discover a network function that has the accuracy monitoring capability.

The apparatus further includes a fourth sending module, configured to send feedback information to the second network function, where the feedback information is used to indicate at least one network function that has the accuracy monitoring capability.

Optionally, the first discovery request includes accuracy monitoring capability requirement information, and the accuracy monitoring capability requirement information is used to indicate to discover a network function that has the accuracy monitoring capability.

Optionally, the accuracy monitoring capability requirement information includes at least one of the following:
first capability requirement information, where the first capability requirement information is used to indicate to discover a network function that has the model accuracy monitoring capability; and
second capability requirement information, where the second capability requirement information is used to indicate to discover a network function that has the analytics accuracy monitoring capability.

The information processing apparatus in this embodiment of this application may be an electronic device, for example, an electronic device with an operating system, or may be a component, for example, an integrated circuit or a chip, in an electronic device. For example, the electronic device may be a network-side device, or may be another device other than the network-side device. For example, the network-side device may include but is not limited to the types of the network-side device 12 listed above, and the another device may be a server, a network attached storage (Network Attached Storage, NAS), or the like. This is not specifically limited in this embodiment of this application.

The information processing apparatus provided in this embodiment of this application can implement the processes implemented in the method embodiment of FIG. 5, and achieve same technical effects. To avoid repetition, details are not described herein again.

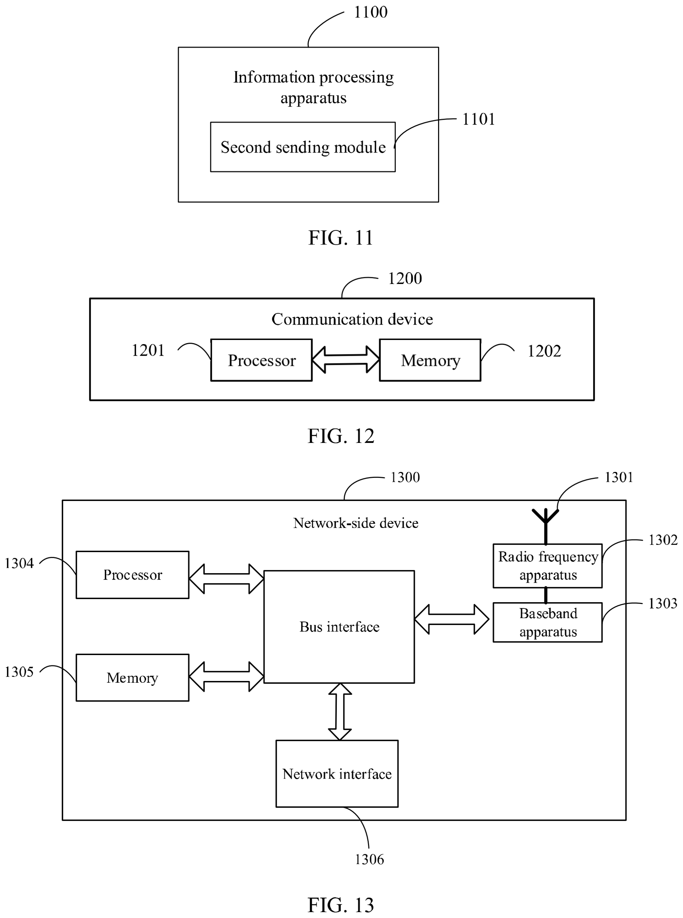

Referring to FIG. 11, FIG. 11 is a structural diagram of an information processing apparatus according to an embodiment of this application. As shown in FIG. 11, an information processing apparatus 1100 includes:
a second sending module 1101, configured to send a first request message to a third network function, where
the first request message includes accuracy monitoring capability information of the first network function, and the first request message is used to request registration of an accuracy monitoring capability of the first network function.

Optionally, the accuracy monitoring capability information of the first network function includes at least one of the following:
first capability information, where the first capability information is used to indicate that the first network function has a model accuracy monitoring capability; and
second capability information, where the second capability information is used to indicate that the first network function has an analytics accuracy monitoring capability.

Optionally, the first network function having the model accuracy monitoring capability means that the first network function has a capability of generating accuracy information of an inference result corresponding to a model.

Optionally, the first network function having the analytics accuracy monitoring capability means that the first network function has a capability of generating accuracy information of an inference result corresponding to analytics, and the accuracy information is generated based on an inference result of one model or based on inference results of at least two models.

Optionally, the analytics accuracy monitoring capability includes at least one of the following:
an analytics accuracy monitoring capability based on a single model; and
an analytics accuracy monitoring capability based on a plurality of models.

Optionally, the first capability information includes identifier information of at least one model.

Optionally, the second capability information includes identifier information of at least one analytics task.

The information processing apparatus in this embodiment of this application may be an electronic device, for example, an electronic device with an operating system, or may be a component, for example, an integrated circuit or a chip, in an electronic device. For example, the electronic device may be a network-side device, or may be another device other than the network-side device. For example, the network-side device may include but is not limited to the types of the network-side device 12 listed above, and the another device may be a server, a network attached storage (Network Attached Storage, NAS), or the like. This is not specifically limited in this embodiment of this application.

The information processing apparatus provided in this embodiment of this application can implement the processes implemented in the method embodiment of FIG. 3, and achieve same technical effects. To avoid repetition, details are not described herein again.

Optionally, as shown in FIG. 12, an embodiment of this application further provides a communication device 1200, including a processor 1201 and a memory 1202. The memory 1202 stores a program or instructions capable of running on the processor 1201. For example, when the communication device 1200 is a first network function, the program or the instructions are executed by the processor 1201 to implement the steps in the foregoing the information processing method embodiment on the first network function side, and same technical effects can be achieved. When the communication device 1200 is a second network function, the program or the instructions are executed by the processor 1201 to implement the steps in the foregoing the information processing method embodiment on the second network function side, and same technical effects can be achieved. When the communication device 1200 is a third network function, the program or the instructions are executed by the processor 1201 to implement the steps in the foregoing information processing method embodiment on the third network function side, and same technical effects can be achieved. To avoid repetition, details are not described herein again.

An embodiment of this application further provides a network-side device, including a processor and a communication interface. When the network-side device is a first network function, the processor is configured to: perform inference on analytics based on at least two models to obtain a first inference result, and determine first accuracy information, where the first accuracy information is used to indicate accuracy for the first inference result or accuracy for an inference result corresponding to the analytics. The communication interface is configured to send first information to a second network function based on the first accuracy information, where the first information includes at least one of the following: first indication information, where the first indication information is used to indicate that the accuracy for the inference result corresponding to the analytics or the first inference result decreases or does not meet an accuracy requirement; the first accuracy information; a metric type corresponding to the first accuracy information; a problem type corresponding to the first accuracy information; second indication information, where the second indication information is used to indicate a recommended operation for the second network function; and third indication information, where the third indication information is used to indicate a time at which the accuracy for the inference result corresponding to the analytics or the first inference result recovers to meet a preset accuracy requirement.

Alternatively, the communication interface is configured to send a first request message to a third network function, where the first request message includes accuracy monitoring capability information of the first network function, and the first request message is used to request registration of an accuracy monitoring capability of the first network function.

When the network-side device is a second network function, the communication interface is configured to receive first information from a first network function, where the first information includes at least one of the following: first indication information, where the first indication information is used to indicate that accuracy for an inference result corresponding to analytics or a first inference result decreases or does not meet an accuracy requirement, and the first inference result is an inference result obtained by the first network function by performing inference on the analytics based on at least two models; first accuracy information, where the first accuracy information is used to indicate the accuracy for the inference result corresponding to the analytics or the first inference result; a metric type corresponding to the first accuracy information; a problem type corresponding to the first accuracy information; second indication information, where the second indication information is used to indicate a recommended operation for the second network function; and third indication information, where the third indication information is used to indicate a time at which the accuracy for the inference result corresponding to the analytics or the first inference result recovers to meet a preset accuracy requirement.

When the network-side device is a third network function, the communication interface is configured to receive a first request message from a first network function, where the first request message includes accuracy monitoring capability information of the first network function, and the first request message is used to request registration of an accuracy monitoring capability of the first network function. The processor is configured to store the accuracy monitoring capability information of the first network function.

This network-side device embodiment corresponds to the foregoing network function method embodiment. Each implementing process and implementation of the foregoing method embodiment are applicable to the network-side device embodiment, and same technical effects can be achieved.

Specifically, an embodiment of this application further provides a network-side device. As shown in FIG. 13, the network-side device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301, and sends the received information to the baseband apparatus 1303 for processing. In a downlink direction, the baseband apparatus 1303 processes to-be-sent information, and sends processed information to the radio frequency apparatus 1302. After processing the received information, the radio frequency apparatus 1302 sends processed information through the antenna 1301.

The method performed by the network-side device in the foregoing embodiment may be implemented in the baseband apparatus 1303. The baseband apparatus 1303 includes a baseband processor.

For example, the baseband apparatus 1303 may include at least one baseband board. A plurality of chips are disposed on the baseband board. As shown in FIG. 13, one of the chips is, for example, the baseband processor, and is connected to the memory 1305 by using a bus interface, to invoke a program in the memory 1305 to perform an operation of a network device shown in the foregoing method embodiment.

The network-side device may further include a network interface 1306, and the interface is, for example, a common public radio interface (Common Public Radio Interface, CPRI).

Specifically, the network-side device 1300 in this embodiment of the present invention further includes instructions or a program stored in the memory 1305 and capable of running on the processor 1304. The processor 1304 invokes the instructions or the program in the memory 1305 to perform the method performed by the modules shown in any one of FIG. 8 to FIG. 11, and same technical effects are achieved. To avoid repetition, details are not described herein again.

An embodiment of this application further provides a readable storage medium. The readable storage medium stores a program or instructions. The program or instructions are executed by a processor to implement the processes in the foregoing information processing method embodiment, and same technical effects can be achieved. To avoid repetition, details are not described herein again.

The processor is a processor in the terminal in the foregoing embodiments. The readable storage medium includes a computer-readable storage medium, such as a read-only memory (Read-Only Memory, ROM), a random access memory (Random Access Memory, RAM), a magnetic disk, or an optical disc. In some examples, the readable storage medium may be a non-transient readable storage medium.

An embodiment of this application further provides a chip. The chip includes a processor and a communication interface. The communication interface is coupled to the processor. The processor is configured to run a program or instructions, to implement the processes in the foregoing information processing method embodiment, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing information processing method embodiment, and same technical effects can be achieved. To avoid repetition, details are not described herein again.

An embodiment of this application further provides an information processing system, including a first network function, a second network function, and a third network function. The first network function is configured to execute the processes in FIG. 2 and the foregoing method embodiments, the second network function is configured to execute the processes in FIG. 4 and the foregoing method embodiments, and the third network function is configured to execute the processes in FIG. 5 and the foregoing method embodiments, and same technical effects can be achieved. To avoid repetition, details are not described herein again.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An information processing method, comprising:
performing, by a first network function, inference on analytics based on at least two models to obtain a first inference result;
determining, by the first network function, first accuracy information, wherein the first accuracy information is used to indicate accuracy for the first inference result or accuracy for an inference result corresponding to the analytics; and
sending, by the first network function, first information to a second network function based on the first accuracy information, wherein the first information comprises at least one of the following:
first indication information, wherein the first indication information is used to indicate that the accuracy for the inference result corresponding to the analytics or the first inference result decreases or does not meet an accuracy requirement;
the first accuracy information;
a metric type corresponding to the first accuracy information;
a problem type corresponding to the first accuracy information;
second indication information, wherein the second indication information is used to indicate a recommended operation for the second network function; and
third indication information, wherein the third indication information is used to indicate a time at which the accuracy for the inference result corresponding to the analytics or the first inference result recovers to meet a preset accuracy requirement.

2. The method according to claim 1, wherein the sending, by the first network function, first information to a second network function based on the first accuracy information comprises:
in a case that the first accuracy information meets a first condition, sending, by the first network function, the first information to the second network function.

3. The method according to claim 2, wherein the first accuracy information meeting the first condition comprises at least one of the following:
the first accuracy information reaches or crosses a first preset value that is set in the first network function;
the first accuracy information reaches or crosses a second preset value received by the first network function; and
the first accuracy information reaches or crosses second accuracy information, wherein the second accuracy information is determined based on received accuracy information of the at least two models.

4. The method according to any one of claims 1 to 3, wherein the performing, by a first network function, inference on analytics based on at least two models to obtain a first inference result comprises:
separately performing, by the first network function, inference on the analytics based on the at least two models to obtain at least two inference results, and aggregating the at least two inference results to obtain the first inference result; or
dividing, by the first network function, a first time period into at least one sub-time period, performing inference on the analytics based on one of the at least two models in each sub-time period to obtain an inference result corresponding to each sub-time period, and aggregating the inference result corresponding to the at least one sub-time period to obtain the first inference result corresponding to the first time period; or
dividing, by the first network function, a first area into at least one sub-area, performing inference on the analytics based on one of the at least two models for each sub-area to obtain an inference result corresponding to each sub-area, and aggregating the inference result corresponding to the at least one sub-area to obtain the first inference result corresponding to the first area.

5. The method according to any one of claims 1 to 4, wherein the determining, by the first network function, first accuracy information comprises:
obtaining, by the first network function, ground truth corresponding to the first inference result; and
obtaining, by the first network function, the first accuracy information based on the first inference result and the ground truth corresponding to the first inference result.

6. The method according to any one of claims 1 to 4, wherein the determining, by the first network function, first accuracy information comprises:
determining, by the first network function, sub-accuracy information corresponding to each of the at least two models; and
determining, by the first network function, the first accuracy information based on the sub-accuracy information corresponding to each model.

7. The method according to any one of claims 1 to 6, wherein the method further comprises:
sending, by the first network function, a first request message to a third network function, wherein the first request message comprises accuracy monitoring capability information of the first network function, and the first request message is used to request registration of accuracy monitoring capability of the first network function.

8. The method according to claim 7, wherein the accuracy monitoring capability information of the first network function comprises at least one of the following:
first capability information, wherein the first capability information is used to indicate that the first network function has a model accuracy monitoring capability; and
second capability information, wherein the second capability information is used to indicate that the first network function has an analytics accuracy monitoring capability.

9. The method according to claim 8, wherein the first network function having the model accuracy monitoring capability means that the first network function has a capability of generating accuracy information of an inference result corresponding to a model.

10. The method according to claim 8, wherein the first network function having the analytics accuracy monitoring capability means that the first network function has a capability of generating accuracy information of an inference result corresponding to analytics, and the accuracy information is generated based on an inference result of one model or based on inference results of at least two models.

11. The method according to claim 8, wherein the analytics accuracy monitoring capability comprises at least one of the following:
an analytics accuracy monitoring capability based on a single model; and
an analytics accuracy monitoring capability based on a plurality of models.

12. The method according to claim 8 or 9, wherein the first capability information comprises:
identifier information of at least one model.

13. The method according to claim 8 or 10, wherein the second capability information comprises:
identifier information of at least one analytics task.

14. The method according to any one of claims 1 to 13, wherein the second network function is a network function that requests the analytics.

15. An information processing method, comprising:
receiving, by a second network function, first information from a first network function, wherein the first information comprises at least one of the following:
first indication information, wherein the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, wherein the first accuracy information is used to indicate the accuracy for the inference result corresponding to the analytics or the first inference result;
a metric type corresponding to the first accuracy information;
a problem type corresponding to the first accuracy information;
second indication information, wherein the second indication information is used to indicate a recommended operation for the second network function; and
third indication information, wherein the third indication information is used to indicate a time at which the accuracy for the inference result corresponding to the analytics or the first inference result recovers to meet a preset accuracy requirement.

16. The method according to claim 15, wherein the method further comprises:
performing, by the second network function, a first operation based on the first information.

17. The method according to claim 16, wherein the first operation comprises at least one of the following:
stopping using the first inference result received from the first network function, or continuing to use the first inference result received from the first network function; and
requesting the inference result corresponding to the analytics from a fourth network function.

18. The method according to any one of claims 15 to 17, wherein the method further comprises:
sending, by the second network function, a first discovery request to a third network function, wherein the first discovery request is used to request to discover a network function that has an accuracy monitoring capability; and
receiving, by the second network function, feedback information from the third network function, wherein the feedback information is used to indicate at least one network function that has the accuracy monitoring capability.

19. The method according to claim 18, wherein the first discovery request comprises accuracy monitoring capability requirement information, and the accuracy monitoring capability requirement information is used to indicate to discover a network function that has the accuracy monitoring capability.

20. The method according to claim 16, wherein the accuracy monitoring capability requirement information comprises at least one of the following:
first capability requirement information, wherein the first capability requirement information is used to indicate to discover a network function that has a model accuracy monitoring capability; and
second capability requirement information, wherein the second capability requirement information is used to indicate to discover a network function that has an analytics accuracy monitoring capability.

21. An information processing method, comprising:
receiving, by a third network function, a first request message from a first network function, wherein the first request message comprises accuracy monitoring capability information of the first network function, and the first request message is used to request registration of an accuracy monitoring capability of the first network function; and
storing, by the third network function, the accuracy monitoring capability information of the first network function.

22. The method according to claim 21, wherein the accuracy monitoring capability information of the first network function comprises at least one of the following:
first capability information, wherein the first capability information is used to indicate that the first network function has a model accuracy monitoring capability; and
second capability information, wherein the second capability information is used to indicate that the first network function has an analytics accuracy monitoring capability.

23. The method according to claim 22, wherein the first network function having the model accuracy monitoring capability means that the first network function has a capability of generating accuracy information of an inference result corresponding to a model.

24. The method according to claim 22, wherein the first network function having the analytics accuracy monitoring capability means that the first network function has a capability of generating accuracy information of an inference result corresponding to analytics, and the accuracy information is generated based on an inference result of one model or based on inference results of at least two models.

25. The method according to claim 22, wherein the analytics accuracy monitoring capability comprises at least one of the following:
an analytics accuracy monitoring capability based on a single model; and
an analytics accuracy monitoring capability based on a plurality of models.

26. The method according to claim 22 or 23, wherein the first capability information comprises:
identifier information of at least one model.

27. The method according to claim 22 or 24, wherein the second capability information comprises:
identifier information of at least one analytics task.

28. The method according to any one of claims 21 to 27, wherein the method further comprises:
receiving, by the third network function, a first discovery request from a second network function, wherein the first discovery request is used to discover a network function that has the accuracy monitoring capability; and
sending, by the third network function, feedback information to the second network function, wherein the feedback information is used to indicate at least one network function that has the accuracy monitoring capability.

29. The method according to claim 28, wherein the first discovery request comprises accuracy monitoring capability requirement information, and the accuracy monitoring capability requirement information is used to indicate to discover a network function that has the accuracy monitoring capability.

30. The method according to claim 29, wherein the accuracy monitoring capability requirement information comprises at least one of the following:
first capability requirement information, wherein the first capability requirement information is used to indicate to discover a network function that has the model accuracy monitoring capability; and
second capability requirement information, wherein the second capability requirement information is used to indicate to discover a network function that has the analytics accuracy monitoring capability.

31. An information processing apparatus, comprising:
a first inference module, configured to perform inference on analytics based on at least two models to obtain a first inference result;
a first determining module, configured to determine first accuracy information, wherein the first accuracy information is used to indicate accuracy for the first inference result or accuracy for an inference result corresponding to the analytics; and
a first sending module, configured to send first information to a second network function based on the first accuracy information, wherein the first information comprises at least one of the following:
first indication information, wherein the first indication information is used to indicate that the accuracy for the inference result corresponding to the analytics or the first inference result decreases or does not meet an accuracy requirement;
the first accuracy information;
a metric type corresponding to the first accuracy information;
a problem type corresponding to the first accuracy information;
second indication information, wherein the second indication information is used to indicate a recommended operation for the second network function; and
third indication information, wherein the third indication information is used to indicate a time at which the accuracy for the inference result corresponding to the analytics or the first inference result recovers to meet a preset accuracy requirement.

32. An information processing apparatus, comprising:
a first receiving module, configured to receive first information from a first network function, wherein the first information comprises at least one of the following:
first indication information, wherein the first indication information is used to indicate that accuracy for an inference result corresponding to analytics or a first inference result decreases or does not meet an accuracy requirement, and the first inference result is an inference result obtained by the first network function by performing inference on the analytics based on at least two models;
first accuracy information, wherein the first accuracy information is used to indicate the accuracy for the inference result corresponding to the analytics or the first inference result;
a metric type corresponding to the first accuracy information;
a problem type corresponding to the first accuracy information;
second indication information, wherein the second indication information is used to indicate a recommended operation for a second network function; and
third indication information, wherein the third indication information is used to indicate a time at which the accuracy for the inference result corresponding to the analytics or the first inference result recovers to meet a preset accuracy requirement.

33. An information processing apparatus, comprising:
a second receiving module, configured to receive a first request message from a first network function, wherein the first request message comprises accuracy monitoring capability information of the first network function, and the first request message is used to request registration of an accuracy monitoring capability of the first network function; and
a storage module, configured to store the accuracy monitoring capability information of the first network function.

34. A first network function, comprising a processor and a memory, wherein the memory stores a program or instructions capable of running on the processor, and the program or the instructions are executed by the processor to implement the steps of the information processing method according to any one of claims 1 to 14.

35. A second network function, comprising a processor and a memory, wherein the memory stores a program or instructions capable of running on the processor, and the program or the instructions are executed by the processor to implement the steps of the information processing method according to any one of claims 15 to 20.

36. A third network function, comprising a processor and a memory, wherein the memory stores a program or instructions capable of running on the processor, and the program or the instructions are executed by the processor to implement the steps of the information processing method according to any one of claims 21 to 30.

37. A readable storage medium, wherein the readable storage medium stores a program or instructions, and the program or the instructions are executed by a processor to implement the steps of the information processing method according to any one of claims 1 to 14, or implement the steps of the information processing method according to any one of claims 15 to 20, or implement the steps of the information processing method according to any one of claims 21 to 30.
